# EUROPÄISCHE PATENTSCHRIFT

(11) **EP 4 154 996 B1**
(45) Veröffentlichungstag und Bekanntmachung des Hinweises auf die Patenterteilung: **23.04.2025**
(21) Anmeldenummer: 22185349.2
(22) Anmeldetag: 18.07.2022
(51) Int. Cl.: B05D 1/28, B05D 5/06, B05D 7/04, C09D 5/36, C09D 7/61, C09D 7/40, B05D 3/06, C08K 3/013

(54) **VERFAHREN ZUR HERSTELLUNG MECHANISCH ROBUSTER FARBMITTELHALTIGER BESCHICHTUNGEN**
METHOD FOR PRODUCING MECHANICALLY ROBUST COLORANT-CONTAINING COATINGS
PROCÉDÉ DE FABRICATION DE REVÊTEMENTS MÉCANIQUEMENT ROBUSTES CONTENANT DES COLORANTS

(30) Priorität: 28.09.2021 DE 102021125055
(43) Veröffentlichungstag der Anmeldung: 29.03.2023
(73) Patentinhaber: Heidelberger Druckmaschinen AG, 69115 Heidelberg (DE)
(72) Erfinder: Schmitt-Lewen, Martin, 69118 Heidelberg (DE)

(56) Entgegenhaltungen:
- EP-A1- 3 670 470
- US-A1- 2018 147 871

## Beschreibung

Die vorliegende Erfindung betrifft ein Verfahren zur Herstellung einer Beschichtung, die wenigstens ein sich an Grenzflächen anreicherndes Farbmittel aufweist.

In der Druckindustrie sind unterschiedliche Verfahren bekannt, um Druckerzeugnisse mit optisch ansprechenden metallisch glänzenden Beschichtungen zu versehen. Eine gängige Vorgehensweise ist beispielsweise das Aufkleben von glänzenden Folien in Folientransfer-Druckverfahren. Eine weitere bekannte Möglichkeit ist das direkte Aufdrucken von pigmenthaltigen Druckfarben oder Drucklacken auf den Bedruckstoff, wobei die bedruckten Bedruckstoffe anschließend in der Druckmaschine gehärtet werden. Ein hierfür bekanntes Druckverfahren ist beispielsweise der Offsetdruck.

Im Stand der Technik bekannt sind Druckfarben und Drucklacke, die Effektpigmente enthalten. Dabei unterscheidet man grundsätzlich zwischen Druckfarben und Drucklacken mit aufschwimmenden Pigmenten oder Leafing-Pigmenten (engl. Leafing pigments) und nicht-aufschwimmenden Pigmenten oder Non-Leafing-Pigmenten (engl. Non-Leafing pigments). Im Allgemeinen gelten Druckfarben und Drucklacke mit Leafing-Pigmenten als die Klasse mit der optisch ansprechendsten Metallicwirkung. So sind silberfarbene Drucklacke beliebt, welche Leafing-Pigmente auf Basis von Aluminium enthalten. Solche Leafing-Pigmente sind beispielsweise in der deutschen Industrienorm DIN 55923 beschrieben. Demgegenüber sind zwar auch Druckfarben und Drucklacke auf der Grundlage von Non-Leafing-Pigmenten verbreitet, diese zeigen jedoch in der Regel einen weniger optisch ansprechenden Metalliceffekt und wirken häufig eher matt und grau.

Druckfarben und Drucklacke auf der Basis von Leafing-Pigmenten zeigen zwar einen ausgeprägten Metalliceffekt, haben jedoch einen wichtigen Nachteil. Sie sind problematisch hinsichtlich ihrer mechanischen Robustheit, insbesondere bezogen auf Kratzempfindlichkeit und Scheuerbeständigkeit. Weil die Leafing-Pigmente dicht unter der Oberfläche liegen, sind solche Beschichtungen empfindlich und müssen in der Regel durch eine oder mehrere darüberliegende Klarlackschichten vor mechanischem Abrieb geschützt werden. Das Aufbringen von solchen zusätzlichen Schutzschichten ist jedoch aufwendig und unökonomisch. Demgegenüber sind Beschichtungen auf Basis von Druckfarben und Drucklacke mit Non-Leafing-Pigmenten in der Regel unempfindlicher, weil die Pigmente dort im Wesentlichen gleichmäßig verteilt sind. Hier sind in der Regel keine zusätzlichen Schutzschichten erforderlich.

Es besteht ein Bedarf an effizienten Verfahren, mit denen sich mechanisch robuste Beschichtungen mit Leafing-Pigmenten herstellen lassen. Insbesondere besteht Bedarf in der Druckindustrie, solche mechanisch robusten Beschichtungen effizient in Druckmaschinen herstellen zu können.

Die EP 3 165 578 A1 beschreibt eine metallische Offsetdruckfarbe mit Spiegelglanz und ein Druckverfahren. Durch eine überdruckte Schicht soll Abriebstabilität für die Aluminiumpigmente erreicht werden.

Die WO 2008/052645 A2 beschreibt ein Veredelungsverfahren für ein Druckprodukt und eine Beschichtungseinheit. In dem Verfahren wird ein flüssiges Druckmedium in einer Druckmaschine auf einen Träger aufgebracht, dort getrocknet und auf ein Substrat transferiert.

Die US 2018/0147871 A1 beschreibt ein Druckverfahren, in dem plättchenförmige Pigmente zur Herstellung eines Monolayers auf einen Bedruckstoff übertragen und mit einer Schutzschicht versehen werden.

Es ist Aufgabe der vorliegenden Erfindung, ein Verfahren anzugeben, mit dem sich mechanisch robuste Beschichtungen mit Leafing-Pigmenten effizient herstellen lassen. Das Verfahren sollte besonders dafür geeignet sein, in Druckmaschinen zur Herstellung von beschichteten Druckerzeugnissen verwendet werden zu können.

Überraschenderweise wurde nun gefunden, dass sich mechanisch robuste Beschichtungen mit Leafing-Pigmenten vergleichsweise einfach herstellen lassen, indem man zunächst ein härtbares flüssiges Medium, das Leafing-Pigmente umfasst, auf einen Träger aufbringt, dort trocknet und dann als Film mit derjenigen Seite, an der sich die Leafing-Pigmente angereichert haben, mit dem zu beschichtenden Substrat verbindet. Durch diese Vorgehensweise liegen die empfindlichen Leafing-Pigmente entfernt von der äußeren Oberfläche des beschichteten Substrats und sind durch die darüberliegende gehärtete Schicht geschützt.

Das erfindungsgemäße Verfahren ist mit mehreren Vorteilen verbunden. Es ist nicht mehr erforderlich, eine oder mehrere Schutzschichten aufzubringen. Es braucht nicht mehr sichergestellt zu werden, dass pigmenthaltige Schicht und Schutzschicht miteinander kompatibel sind. Das Verfahren kann kontinuierlich in Druckmaschinen ausgeführt werden und ist mit gängigen Druckfarben und Drucklacken sowie Bedruckstoffen kompatibel.

Dementsprechend betrifft die vorliegende Erfindung ein Verfahren zur Herstellung einer Beschichtung, die wenigstens ein sich an Grenzflächen anreicherndes Farbmittel aufweist, umfassend die folgenden Schritte:
i) Bereitstellen eines härtbaren flüssigen Mediums, das wenigstens ein sich an Grenzflächen anreicherndes Farbmittel umfasst,
ii) Auftragen des härtbaren flüssigen Mediums auf einen Träger, wobei sich das an Grenzflächen anreichernde Farbmittel an der Grenzfläche von härtbarem flüssigem Medium und Umgebungsatmosphäre anreichert,
iii) wenigstens teilweises Härten des härtbaren flüssigen Mediums auf dem Träger und
iv) Übertragen des wenigstens teilweise gehärteten härtbaren flüssigen Mediums von dem Träger auf ein Substrat, so dass diejenige Seite, an der sich das an Grenzflächen anreichernde Farbmittel auf dem Träger angereichert hat, auf dem Substrat aufliegt.

In einer bevorzugten Ausführungsform reichert sich das wenigstens eine sich an Grenzflächen anreichernde Farbmittel in dem härtbaren flüssigen Medium aufgrund seiner geringeren Dichte, verglichen mit dem härtbaren flüssigen Medium, und/oder seiner Oberflächenbeschaffenheit an der Grenzfläche von härtbarem flüssigem Medium und Umgebungsatmosphäre an. Unter Umgebungsatmosphäre ist dabei die umgebende Luftatmosphäre, beispielsweise in einer Druckerei, zu verstehen.

In einer besonders bevorzugten Ausführungsform ist das sich an Grenzflächen anreichernde Farbmittel aufgrund seiner Oberflächenbeschaffenheit grenzflächenaktiv. Die Oberflächenbeschaffenheit des sich an Grenzflächen anreichernden Farbmittels kann dabei auch durch Funktionalisierung verändert sein, beispielsweise durch Belegung mit grenzflächenaktiven Verbindungen wie Stearinsäure. Bei der Anreicherung des Farbmittels an Grenzflächen aufgrund seiner Oberflächenbeschaffenheit spielen insbesondere unterschiedliche Oberflächenenergien eine Rolle.

In einer weiteren bevorzugten Ausführungsform handelt es sich bei dem wenigstens einen sich an Grenzflächen anreichernden Farbmittel um wenigstens ein mechanisch empfindliches Pigment. Darunter fallen insbesondere Pigmente, welche durch vergleichsweise geringe äußere Krafteinwirkung beschädigt oder zerstört werden können. Ein Beispiel für eine solche vergleichsweise geringe äußere Krafteinwirkung ist das Anfassen einer mit einer erfindungsgemäßen Beschichtung versehenen Kartonverpackung, etwa eines Kosmetikprodukts, durch die menschliche Hand. Demgegenüber spielen rein thermisch empfindliche Pigmente eher eine untergeordnete Rolle.

In einer weiteren bevorzugten Ausführungsform handelt es sich bei dem wenigstens einen sich an Grenzflächen anreichernden Farbmittel um wenigstens ein Effektpigment. Bei dem wenigstens einen sich an Grenzflächen anreichernden Farbmittel handelt es sich besonders bevorzugt um wenigstens ein anorganisches Pigment, ganz besonders bevorzugt um wenigstens ein anorganisches Metalleffektpigment.

In einer weiteren bevorzugten Ausführungsform handelt es sich bei dem wenigstens einen sich an Grenzflächen anreichernden Farbmittel um wenigstens ein Leafing-Pigment.

In einer weiteren bevorzugten Ausführungsform ist das härtbare flüssige Medium im Wesentlichen transparent. Hierdurch behält das im erfindungsgemäßen Verfahren erhaltene Erzeugnis die optisch ansprechende Wirkung des verwendeten Farbmittels auch durch die vergleichsweise dicke Schicht des gehärteten härtbaren flüssigen Mediums hindurch.

In einer weiteren bevorzugten Ausführungsform führt man das erfindungsgemäße Verfahren mit einer Druckmaschine aus, insbesondere in wenigstens einem Druckwerk einer Druckmaschine, wenigstens einem Lackwerk einer Druckmaschine oder in Kombinationen davon. In dieser Ausführungsform ist der Träger bevorzugt ein Zylinder der Druckmaschine oder eine Platte in der Druckmaschine, besonders bevorzugt ein Zylinder der Druckmaschine. In dieser Ausführungsform trägt man bevorzugt eine UV-härtbare Druckfarbe oder einen UV-härtbaren Drucklack mit einer Kammerrakel mit Rasterwalze oder einem Walzenwerk auf den als bevorzugt genannten Zylinder der Druckmaschine auf. Das Auftragen der UV-härtbaren Druckfarbe oder des UV-härtbaren Drucklacks kann auch mittels einer oder mehrerer Düsen durch Aufsprühen auf den Zylinder der Druckmaschine erfolgen. Anschließend härtet man die UV-härtbare Druckfarbe oder den UV-härtbaren Drucklack auf dem als bevorzugt genannten Zylinder der Druckmaschine durch Bestrahlen mit UV-Strahlung, so dass man einen wenigstens hinreichend gehärteten, übertragbaren Film erhält. Dieser wenigstens teilweise gehärtete Film wird anschließend im Druckspalt des Druckwerks oder Lackwerks der Druckmaschine von dem als Träger verwendeten Zylinder auf das Substrat, bevorzugt Papier, Karton oder Kunststofffolie, übertragen. Um die Haftung des wenigstens teilweise gehärteten flüssigen härtbaren Mediums, das man als Film auf das Substrat überträgt, zu verbessern, ist es möglich, vor dem Übertragen des Films eine Hilfsklebeschicht auf das Substrat oder auf das gehärtete flüssige härtbare Medium aufzubringen, beispielsweise durch Aufsprühen mittels einer oder mehrerer Düsen oder durch Kontaktierung mit einem weiteren Druckmaschinenzylinder zur Übertragung des Klebstoffs aus einem Klebstoffreservoir.

Das erfindungsgemäße Verfahren wird bevorzugt mit einer Druckmaschine ausgeführt, wobei grundsätzlich alle bekannten Druckverfahren eingesetzt werden können. Bevorzugte Druckverfahren sind Rollendruckprozesse, Digitaldruckprozesse, Tampondruck, indirekter Tiefdruck, indirekter Siebdruck, indirekte Elektrofotografie mit Flüssig- oder Trockentoner, indirekte Sprüh-Lackierverfahren und Kombinationen davon.

Das härtbare flüssige Medium kann in der bevorzugten Ausführungsform, in der man das Verfahren mit einer Druckmaschine ausführt, auf einen bebilderten oder einen nicht bebilderten Träger aufgebracht werden. Dementsprechend kann es sich bei dem Träger auch um eine Spotlackplatte oder eine bebilderte Druckplatte handeln.

In der bevorzugten Ausführungsform, in der man das Verfahren mit einer Druckmaschine ausführt, kann als härtbares flüssiges Medium auch ein wasserbasierter UV-Lack verwendet werden, der in Schritt iii) durch Wärmeeinwirkung wenigstens teilweise gehärtet wird und den man nach dem Übertragen auf das Substrat mittels UV-Strahlung endhärtet.

Es ist auch möglich, in der Druckmaschine nacheinander mehrere Schichten unterschiedlicher gehärteter härtbarer flüssiger Medien mit unterschiedlichen sich an Grenzflächen anreichernden Farbmitteln herzustellen. Die Druckmaschine ist dabei bevorzugt mit mehreren hintereinander angeordneten Druckwerken ausgerüstet, wobei in jedem der Druckwerke das erfindungsgemäße Verfahren ausgeführt wird, bevorzugt jeweils mit einem anderen sich an Grenzflächen anreichernden Farbmittel. In weiteren Druckwerken können auch wie im Stand der Technik prinzipiell bekannt weitere Druckfarben oder Drucklacke, die keine sich an Grenzflächen anreichernde Farbmittel aufweisen, aufgedruckt werden.

In einer besonders bevorzugten Ausführungsform betrifft die Erfindung ein Verfahren zur Herstellung einer Beschichtung mit einer Druckmaschine, wobei die Beschichtung wenigstens ein Leafing-Pigment aufweist, umfassend die folgenden Schritte:
i) Bereitstellen einer härtbaren Druckfarbe oder eines härtbaren Drucklacks, umfassend wenigstens ein Leafing-Pigment,
ii) Auftragen der härtbaren Druckfarbe oder des härtbaren Drucklacks auf einen Zylinder oder eine Platte einer Druckmaschine, wobei sich das Leafing-Pigment an der Grenzfläche von härtbarer Druckfarbe oder härtbarem Drucklack und Umgebungsatmosphäre anreichert,
iii) wenigstens teilweises Härten der härtbaren Druckfarbe oder des härtbaren Drucklacks auf dem Zylinder oder der Platte der Druckmaschine und
iv) Übertragen der wenigstens teilweise gehärteten härtbaren Druckfarbe oder des härtbaren Drucklacks von dem Zylinder oder der Platte der Druckmaschine auf einen Bedruckstoff, so dass diejenige Seite, an der sich das Leafing-Pigment auf dem Zylinder oder der Platte der Druckmaschine angereichert hat, auf dem Bedruckstoff aufliegt.

Als Bedruckstoffe sind in dieser besonders bevorzugten Ausführungsform Papier, Karton und Kunststofffolie bevorzugt. Das wenigstens teilweise Härten in Schritt iii) erfolgt bevorzugt mittels Elektronenstrahlung oder UV-Strahlung, besonders bevorzugt mittels UV-Strahlung. Es kann sich auch nur um Anhärten (Pinning) mittels UV-Strahlung handeln, wobei das bedruckte Druckerzeugnis dann zu einem späteren Zeitpunkt, vor dem Verlassen der Druckmaschine, durch Bestrahlen mit einer höheren Dosis UV-Strahlung endgehärtet wird. In dieser besonders bevorzugten Ausführungsform weist der Zylinder der Druckmaschine oder die Platte der Druckmaschine bevorzugt eine Release-Beschichtung auf, beispielsweise einen Zylinderaufzug aus einem Elastomer, mit Hilfe derer die Übertragung der wenigstens teilweise gehärteten härtbaren Druckfarbe oder des härtbaren Drucklacks von dem Zylinder oder der Platte auf den Bedruckstoff erleichtert wird.

Die vorliegende Erfindung ist auch geeignet für die Verwendung des erfindungsgemäßen Verfahrens zur Herstellung von scheuerbeständigen Beschichtungen, die Pigmente umfassen. In einer bevorzugten Ausführungsform handelt es sich dabei um mechanisch empfindliche Pigmente, bevorzugt um mechanisch empfindliche Pigmente, die unter den zuvor genannten Effektpigmenten und deren Bevorzugungen ausgewählt sind. In einer bevorzugten Ausführungsform betrifft die Verwendung die Verwendung in Form eines Druckverfahren in einer Druckmaschine, insbesondere in einer Offsetdruckmaschine.

Die vorliegende Erfindung ist auch geeignet zur Herstellung eines Druckerzeugnisses, erhalten durch das erfindungsgemäße Verfahren. Es handelt sich dabei bevorzugt um Druckerzeugnisse, die man durch Bedrucken von allen gängigen in Druckmaschinen verarbeitbaren Substraten erhält, besonders bevorzugt um ein Druckerzeugnis, das man durch Bedrucken von Papier, Karton oder Kunststofffolie erhält. Solche Druckerzeugnisse weisen trotz der Verwendung von Leafing-Pigmenten ein optisch ansprechendes Aussehen bei gleichzeitig hoher Scheuerbeständigkeit auf.

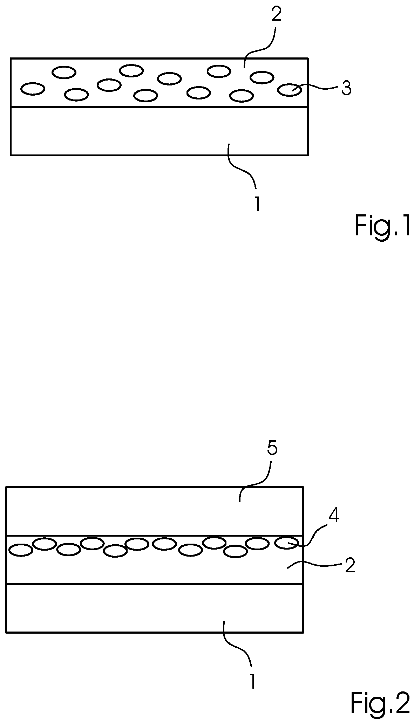

Figur 1 zeigt schematisch ein Druckerzeugnis des Standes der Technik mit Non-Leafing-Pigmenten. Ein härtbares flüssiges Medium, beispielsweise ein Lack, mit Non-Leafing-Pigmenten (3) wurde auf ein Substrat (1), beispielsweise Karton, aufgedruckt und getrocknet, so dass sich das härtbare flüssige Medium härtete und ein gebrauchsfertiges Druckerzeugnis entstand, in dem die Non-Leafing-Pigmente (3) verteilt im gehärteten härtbaren flüssigen Medium (2) vorliegen. Solche Druckerzeugnisse haben üblicherweise keine Probleme hinsichtlich mechanischer Robustheit, allerdings ist bei Verwendung von Metalleffektpigmenten als Non-Leafing-Pigmente die optische Metallicwirkung oftmals nicht besonders ausgeprägt.

Figur 2 zeigt schematisch ein weiteres Druckerzeugnis des Standes der Technik mit Leafing-Pigmenten. Ein härtbares flüssiges Medium, beispielsweise ein Lack, mit Leafing-Pigmenten (4) wurde auf ein Substrat (1), beispielsweise Karton, aufgedruckt und getrocknet, so dass sich das härtbare flüssige Medium härtete. Die Leafing-Pigmente (4) haben sich zuvor an der äußeren Oberfläche des härtbaren flüssigen Mediums angereichert. Auf das gehärtete härtbare flüssige Medium (2) mit den Leafing-Pigmenten (4) wurde eine transparente Schutzschicht (5), beispielsweise ein Klarlack, aufgetragen und getrocknet. Solche Druckerzeugnisse haben bei Verwendung von Metalleffektpigmenten als Leafing-Pigmente üblicherweise eine besonders ausgeprägte optische Metallicwirkung, sind jedoch vergleichsweise aufwendig herzustellen.

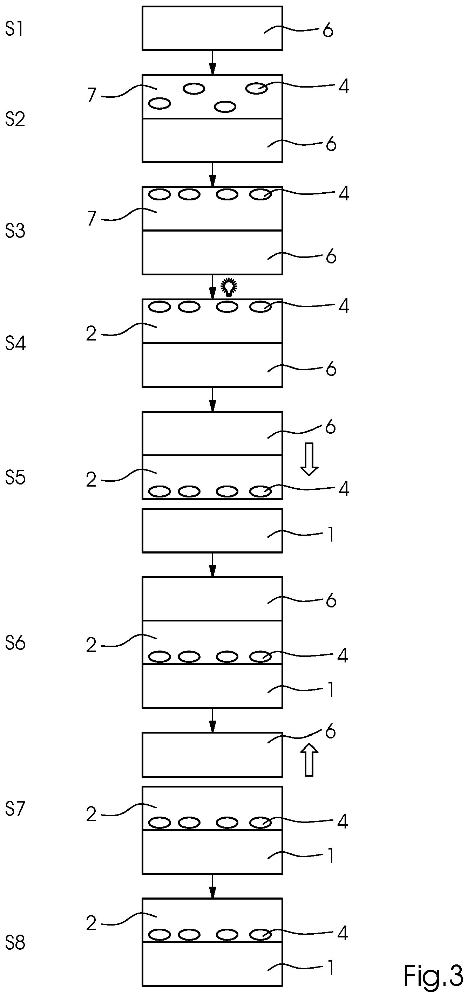

Figur 3 zeigt schematisch das erfindungsgemäße Verfahren. In Schritt S1 stellt man einen Träger bereit, beispielsweise einen Druckmaschinenzylinder. In Schritt S2 beschichtet man den Träger (6) mit einem ungehärteten härtbaren flüssigen Medium (7), das Leafing-Pigmente (4) enthält. Dieser Schritt kann beispielsweise durch Kontaktieren des Trägers, insbesondere eines Druckmaschinenzylinders, mit einem weiteren Druckmaschinenzylinder, insbesondere einer Dosierwalze wie beispielsweise einer Rasterwalze, erfolgen. In Schritt S3 schwimmen die Leafing-Pigmente in dem ungehärteten flüssigen Medium (7) auf und reichern sich an der Grenzfläche von ungehärtetem härtbarem flüssigem Medium (7) und Umgebungsatmosphäre an. In Schritt S4 härtet man das ungehärtete flüssige Medium (7), beispielsweise durch Bestrahlen mit UV-Strahlung, so dass man ein gehärtetes härtbares flüssiges Medium (2) auf dem Träger (6) erhält. In Schritt S5 kontaktiert man das gehärtete härtbare flüssige Medium (2) mit einem Substrat (1), beispielsweise Karton oder Folie, so dass diejenige Seite, an der sich das Leafing-Pigment (4) auf dem Träger (6) angereichert hat, auf dem Substrat (1) aufliegt. Schritt S6 zeigt die Einheit aus Träger (6) mit gehärtetem härtbarem flüssigem Medium (2) und Substrat (1). In Schritt S7 entfernt man den Träger (6), so dass die Einheit aus gehärtetem härtbarem flüssigem Medium (2) und Substrat (1) zurückbleibt. Diese ist in Schritt S8 gezeigt. Die empfindlichen Leafing-Pigmente (4) liegen dabei geschützt entfernt von der äußeren Oberfläche des beschichteten Erzeugnisses.

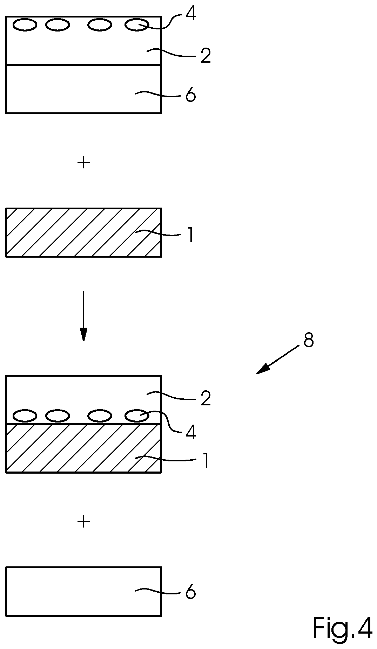

Figur 4 zeigt schematisch und noch stärker vereinfacht das erfindungsgemäße Verfahren. Zunächst stellt man auf einem Träger (6) eine gehärtete Beschichtung eines härtbaren flüssigen Mediums (2) her, welches Leafing-Pigmente (4) enthält. Die Leafing-Pigmente haben sich naturgemäß an der Grenzfläche zwischen flüssigem Medium und Umgebungsatmosphäre angereichert und wurden durch die Härtung in dieser Position fixiert. Der so beschichtete Träger (6) wird mit einem Substrat (1) in Kontakt gebracht, so dass die Oberfläche, an der sich die Leafing-Pigmente (4) angereichert haben, möglichst dicht auf dem Substrat (1) liegt. Anschließend wird der Träger (6) entfernt. Im Ergebnis erhält man ein beschichtetes Erzeugnis (8), bei dem die empfindlichen Leafing-Pigmente (4) entfernt von der äußeren Oberfläche des beschichteten Erzeugnisses (8) geschützt im Inneren liegen.

### Bezugszeichenliste

- 1: Substrat
- 2: gehärtetes härtbares flüssiges Medium
- 3: Non-Leafing-Pigment
- 4: Leafing-Pigment
- 5: transparente Schutzschicht
- 6: Träger
- 7: ungehärtetes härtbares flüssiges Medium
- 8: beschichtetes Erzeugnis
- 9: sich an Grenzflächen anreicherndes Farbmittel

## Patentansprüche

1. Verfahren zur Herstellung einer Beschichtung, die wenigstens ein sich an Grenzflächen anreicherndes Farbmittel (9) aufweist, umfassend die folgenden Schritte:
i) Bereitstellen eines härtbaren flüssigen Mediums (7), das wenigstens ein sich an Grenzflächen anreicherndes Farbmittel (9) umfasst,
ii) Auftragen des härtbaren flüssigen Mediums (7) auf einen Träger (6), wobei sich das an Grenzflächen anreichernde Farbmittel (9) an der Grenzfläche von härtbarem flüssigem Medium (7) und Umgebungsatmosphäre anreichert,
iii) wenigstens teilweises Härten des härtbaren flüssigen Mediums (7) auf dem Träger (6) und
iv) Übertragen des wenigstens teilweise gehärteten härtbaren flüssigen Mediums (2) von dem Träger (6) auf ein Substrat (1), so dass diejenige Seite, an der sich das an Grenzflächen anreichernde Farbmittel (9) auf dem Träger (6) angereichert hat, auf dem Substrat (1) aufliegt.

2. Verfahren nach Anspruch 1, wobei sich das wenigstens eine sich an Grenzflächen anreichernde Farbmittel (9) in dem härtbaren flüssigen Medium (7) aufgrund seiner geringeren Dichte, verglichen mit dem härtbaren flüssigen Medium (7), und/oder seiner Oberflächenbeschaffenheit an der Grenzfläche von härtbarem flüssigem Medium (7) und Umgebungsatmosphäre anreichert.

3. Verfahren nach einem der vorhergehenden Ansprüche, wobei es sich bei dem wenigstens einen sich an Grenzflächen anreichernden Farbmittel (9) um wenigstens ein Effektpigment handelt.

4. Verfahren nach einem der vorhergehenden Ansprüche, wobei es sich bei dem wenigstens einen sich an Grenzflächen anreichernden Farbmittel (9) um wenigstens ein anorganisches Metalleffektpigment handelt.

5. Verfahren nach einem der vorhergehenden Ansprüche, wobei es sich bei dem wenigstens einen sich an Grenzflächen anreichernden Farbmittel (9) um wenigstens ein Leafing-Pigment (4) handelt.

6. Verfahren nach einem der vorhergehenden Ansprüche, wobei das härtbare flüssige Medium (7) im Wesentlichen transparent ist.

7. Verfahren nach einem der vorhergehenden Ansprüche, wobei man das Verfahren mit einer Druckmaschine ausführt.

8. Verfahren nach Anspruch 7, wobei der Träger (6) ein Zylinder der Druckmaschine ist.

9. Verfahren nach einem der vorhergehenden Ansprüche, wobei es sich bei dem härtbaren flüssigen Medium (7), das wenigstens ein sich an Grenzflächen anreicherndes Farbmittel (9) umfasst, um eine Druckfarbe oder einen Drucklack handelt.

10. Verfahren nach einem der vorhergehenden Ansprüche, wobei das Substrat (1) ausgewählt ist unter Papier, Karton und Kunststofffolie.

11. Verfahren nach einem der vorhergehenden Ansprüche, umfassend die folgenden Schritte:
i) Bereitstellen einer härtbaren Druckfarbe oder eines härtbaren Drucklacks, umfassend wenigstens ein Leafing-Pigment (4),
ii) Auftragen der härtbaren Druckfarbe oder des härtbaren Drucklacks auf einen Zylinder oder eine Platte einer Druckmaschine, wobei sich das Leafing-Pigment (4) an der Grenzfläche von härtbarer Druckfarbe oder härtbarem Drucklack und Umgebungsatmosphäre anreichert,
iii) wenigstens teilweises Härten der härtbaren Druckfarbe oder des härtbaren Drucklacks auf dem Zylinder oder der Platte der Druckmaschine und
iv) Übertragen der wenigstens teilweise gehärteten härtbaren Druckfarbe oder des härtbaren Drucklacks von dem Zylinder oder der Platte der Druckmaschine auf einen Bedruckstoff, so dass diejenige Seite, an der sich das Leafing-Pigment (4) auf dem Zylinder oder der Platte der Druckmaschine angereichert hat, auf dem Bedruckstoff aufliegt.

## Claims

1. Method of producing a coating provided with at least one colorant which accumulates at interfaces (9), comprising the following steps:
i) Provision of a curable liquid medium (7) which comprises at least one colorant which accumulates at interfaces (9),
ii) Application of the curable liquid medium (7) to a carrier (6), whereby the colorant which accumulates at interfaces (9) accumulates at the interface between the curable liquid medium (7) and the ambient atmosphere,
iii) At least partial curing of the curable liquid medium (7) on the carrier (6) and
iv) Transfer of the at least partially cured curable liquid medium (2) from the carrier (6) to a substrate (1), so that the side on which the colorant which accumulates at interfaces (9) has accumulated on the carrier (6) rests on the substrate (1).

2. Method according to claim 1, wherein the at least one colorant which accumulates at interfaces (9) accumulates in the curable liquid medium (7) by virtue of its lower density compared to the curable liquid medium (7) and/or its surface properties at the interface between the curable liquid medium (7) and the ambient atmosphere.

3. Method according to one of the previous claims, wherein the at least one colorant which accumulates at interfaces (9) is at least one effect pigment.

4. Method according to one of the previous claims, wherein the at least one colorant which accumulates at interfaces (9) is at least one inorganic metal effect pigment.

5. Method according to one of the previous claims, wherein the at least one colorant which accumulates at interfaces (9) is at least one leafing pigment (4).

6. Method according to one of the previous claims, wherein the curable liquid medium (7) is substantially transparent.

7. Method according to one of the previous claims, wherein the process is carried out with a printing press.

8. Method according to claim 7, wherein the carrier (6) is a cylinder of the printing press.

9. Method according to one of the previous claims, wherein the curable liquid medium (7) comprising at least one colorant which accumulates at interfaces (9) is a printing ink or a printing varnish.

10. Method according to one of the previous claims, wherein the substrate (1) is selected from paper, cardboard and plastic sheet.

11. Method according to one of the previous claims, comprising the following steps:
i) Provision of a curable printing ink or a curable printing varnish comprising at least one leafing pigment (4),
ii) Application of the curable printing ink or the curable printing varnish to a cylinder or a plate of a printing press, whereby the leafing pigment (4) accumulates at the interface between the curable printing ink or the curable printing varnish and the ambient atmosphere,
iii) At least partial curing of the curable printing ink or the curable printing varnish on the cylinder or the plate of the printing press and
iv) Transfer of the at least partially cured curable printing ink or curable printing varnish from the cylinder or the plate of the printing press to a printing material, so that the side on which the leafing pigment (4) has accumulated on the cylinder or the plate of the printing press rests on the printing material.

## Revendications

1. Procédé de fabrication d'un revêtement présentant au moins un agent colorant (9) s'enrichissant aux interfaces, comprenant les étapes suivantes :
i) fourniture d'un fluide liquide durcissable (7) comprenant au moins un agent colorant (9) s'enrichissant aux interfaces,
ii) application du fluide liquide durcissable (7) sur un support (6), l'agent colorant (9) s'enrichissant aux interfaces s'enrichissant à l'interface du fluide liquide durcissable (7) et de l'atmosphère ambiante,
iii) durcissement au moins partiel du fluide liquide durcissable (7) sur le support (6), et
iv) transfert du fluide liquide durcissable (2) au moins partiellement durci du support (6) sur un substrat (1), de sorte que le côté sur lequel l'agent colorant (9) s'enrichissant aux interfaces s'est enrichi sur le support (6), soit appliqué sur le substrat (1).

2. Procédé selon la revendication 1, dans lequel l'agent colorant (9), au nombre d'au moins un, qui s'enrichit aux interfaces, s'enrichit dans le fluide liquide durcissable (7) en raison de sa densité plus faible, comparée à celle du fluide liquide durcissable (7), et/ou de son état de surface à l'interface du fluide liquide durcissable (7) et de l'atmosphère ambiante.

3. Procédé selon l'une des revendications précédentes, pour lequel l'agent colorant (9), au nombre d'au moins un, s'enrichissant aux interfaces est au moins un pigment à effet.

4. Procédé selon l'une des revendications précédentes, pour lequel l'agent colorant (9), au nombre d'au moins un, s'enrichissant aux interfaces, est au moins un pigment inorganique à effet métallique.

5. Procédé selon l'une des revendications précédentes, pour lequel l'agent colorant (9), au nombre d'au moins un, s'enrichissant aux interfaces est au moins un pigment pelliculant (4).

6. Procédé selon l'une des revendications précédentes, pour lequel le fluide liquide durcissable (7) est essentiellement transparent.

7. Procédé selon l'une des revendications précédentes, pour lequel le procédé est exécuté avec une machine à imprimer.

8. Procédé selon la revendication 7, pour lequel le support (6) est un cylindre de la machine à imprimer.

9. Procédé selon l'une des revendications précédentes, pour lequel le fluide liquide durcissable (7), comprenant au moins un agent colorant (9), s'enrichissant aux interfaces est une encre ou un vernis d'impression.

10. Procédé selon l'une quelconque des revendications précédentes, pour lequel le substrat (1) est choisi entre papier, carton et film plastique.

11. Procédé selon l'une des revendications précédentes, comprenant les étapes suivantes :
i) fourniture d'une encre d'impression durcissable ou d'un vernis d'impression durcissable, comprenant au moins un pigment pelliculant (4),
ii) application de l'encre d'impression durcissable ou du vernis d'impression durcissable sur un cylindre ou une plaque d'une machine à imprimer, le pigment pelliculant (4) s'enrichissant à l'interface de l'encre d'impression durcissable ou du vernis d'impression durcissable et de l'atmosphère ambiante,
iii) au moins un durcissement partiel de l'encre ou du vernis d'impression durcissable sur le cylindre ou la plaque de la machine à imprimer, et
iv) transfert de l'encre d'impression durcissable au moins partiellement durcie ou du vernis d'impression durcissable du cylindre ou de la plaque de la machine à imprimer sur un support d'impression, de sorte que le côté sur lequel le pigment pelliculant (4) s'est enrichi sur le cylindre ou la plaque de la machine à imprimer repose sur le support d'impression.
